# EUROPÄISCHE PATENTANMELDUNG

(11) **EP 1 560 140 A1**
(43) Veröffentlichungstag der Anmeldung: **03.08.2005**
(21) Anmeldenummer: 05002049.4
(22) Anmeldetag: 01.02.2005
(51) Int. Cl.: G06F 17/60, H04L 12/18

(54) **Verfahren und System zur elektronischen Interaktion in einem Netzwerk**

(30) Priorität: 02.02.2004 DE 102004005131
(71) Anmelder: Vodafone Holding GmbH, 40213 Düsseldorf (DE)
(72) Erfinder: Holtel, Stefan, 83607 Holzkirchen (DE); Rocholl, Oliver, 82194 Gröbenzell (DE)
(74) Vertreter: Müller, Thomas, Dipl.-Ing.

(57) **Zusammenfassung**

Es wird unter anderem ein Verfahren zur elektronischen Interaktion in einem Netzwerk (10), insbesondere in einem Kommunikationsnetzwerk, beschrieben, wobei das Netzwerk (10) wenigstens eine einer Administratorinstanz (11) zugeordnete Zentraleinheit (12) aufweist und den Nutzern des Netzwerks (10) Endeinrichtungen (13, 14) zugeordnet sind und wobei eine Kommunikation zwischen den Endeinrichtungen (13, 14) und der wenigstens einen Zentraleinheit (12) über die Kommunikationskanäle (15, 16) des Netzwerks (10) erfolgt, Erfindungsgemäß ist vorgesehen, dass über die Kommunikationskanäle (15, 16) bidirektionale Interaktionen zwischen wenigstens einer Zentraleinheit (12) und den Endeinrichtungen (13, 14) übermittelt und/oder durchgeführt werden; dass jedem Nutzer eine Identifikationsdatei zugeordnet wird; dass die jedem Nutzer zugeordnete Identifikationsdatei netzwerkseitig zumindest zeitweilig abgelegt wird, so dass die wenigstens eine Zentraleinheit (12) auf die Identifikationsdateien zugreifen kann; und dass von den Nutzern oder der Administratorinstanz erzeugte Informationsdateien mit den entsprechenden Identifikationsdateien der Nutzer verknüpft und anschließend übertragen werden. Weiterhin wird ein entsprechendes System beschrieben.

## Beschreibung

Die vorliegende Erfindung betrifft zunächst ein Verfahren zur elektronischen Interaktion in einem Netzwerk gemäß dem Oberbegriff von Patentanspruch 1. Weiterhin betrifft die Erfindung ein System zum elektronischen Interagieren gemäß dem Oberbegriff von Patentanspruch 11. Beispielsweise, jedoch nicht ausschließlich kann es sich dabei um die Interaktion eines Publikums mit einem oder während eines exponierten Ereignis(ses) handeln. Das erfindungsgemäße System wird nachfolgend hin und wieder auch "als Audience Interaction System (AIS)" bezeichnet.

Bisher ist bei Ereignissen die klassische Interaktion der Teilnehmer während des Ereignisses begrenzt. Zu denken ist hier beispielsweise an einen Kongress oder dergleichen mit einer Anzahl von Teilnehmern, sowie einer Kongressleitung, die den Kongressablauf, Redebeiträge und Wortmeldungen der Teilnehmer, organisatorische Abläufe und dergleichen steuern und koordinieren muss. Dabei kann die Diskrepanz zwischen Aktion und Reaktion zu Informationsverlusten führen.

In der zur vorliegenden Anmeldung nachveröffentlichten DE 103 07 551 A1 ist in diesem Zusammenhang ein Verfahren zur Erfassung von Stimmabgaben mittels elektronischer Stimmabgabegeräte beschrieben, bei dem von den Stimmabgabegeräten gesendete Abstimmdatensätze und zugehörige Identifikationsdatensätze auf einem zentralen Abstimmungsserver erfasst und ausgewertet werden. Dieses Verfahren soll insbesondere bei Hauptversammlungen von Aktiengesellschaften zum Einsatz kommen. Auf dem Abstimmungsserver werden Stimmrechtdatensätze mit zugeordneten Identifikationsdatensätzen bereitgehalten. Sobald die Abstimmdatensätze mit den zugehörigen Identifikationsdatensätzen übertragen worden sind, werden die Identifikationsdatensätze miteinander verglichen und bei Übereinstimmung die Daten im Abstimmungsserver entsprechend weiter verarbeitet.

Die bisher bekannten Lösungen weisen jedoch eine Reihe von Nachteilen auf. So ist nur eine unidirektionale, standardisierte Kommunikation zwischen den Teilnehmern und dem Koordinator (Abstimmungsserver) möglich. Insbesondere bei Veranstaltungen mit einer großen Anzahl von Teilnehmern minimiert die große Anzahl mögliche Interaktionen. Zeitnahe Umfragen und dergleichen sind fast unmöglich, ebenso die Darstellung solcher Ergebnisse, die Darstellung angehängter Bilder, die Verbreitung zusätzlicher Informationen und dergleichen. All dies führt zu einer reduzierten Anteilnahme der Teilnehmer an der Veranstaltung.

Der vorliegenden Erfindung liegt die Aufgabe zugrunde, diese Nachteile zu umgehen.

Die Aufgabe wird erfindungsgemäß gelöst durch das Verfahren mit den Merkmalen gemäß dem unabhängigen Patentanspruch 1 sowie das System mit den Merkmalen gemäß dem unabhängigen Patentanspruch 11. Weitere Merkmale, Details und Vorteile der Erfindung ergeben sich aus den Unteransprüchen, der Beschreibung sowie der Zeichnung. Merkmale, Details und Vorteile, die im Zusammenhang mit dem erfindungsgemäßen Verfahren beschrieben sind, gelten dabei selbstverständlich auch im Zusammenhang mit dem erfindungsgemäßen System, und umgekehrt.

Erfindungsgemäß wird ein Verfahren zur elektronischen Interaktion in einem Netzwerk, insbesondere in einem Kommunikationsnetzwerk, bereitgestellt, wobei das Netzwerk wenigstens eine einer Administratorinstanz zugeordnete Zentraleinheit aufweist und den Nutzern des Netzwerks Endeinrichtungen zugeordnet sind und wobei eine Kommunikation zwischen den Endeinrichtungen und der wenigstens einen Zentraleinheit über die Kommunikationskanäle des Netzwerks erfolgt. Das Verfahren ist dadurch gekennzeichnet, dass über die Kommunikationskanäle bidirektionale Interaktionen zwischen wenigstens einer Zentraleinheit und den Endeinrichtungen übermittelt und/oder durchgeführt werden; dass jedem Nutzer eine Identifikationsdatei zugeordnet wird; dass die jedem Nutzer zugeordnete Identifikationsdatei netzwerkseitig zumindest zeitweilig abgelegt wird, so dass die wenigstens eine Zentraleinheit auf die Identifikationsdateien zugreifen kann; und dass von den Nutzern oder der Administratorinstanz erzeugte Informationsdateien mit den entsprechenden Identifikationsdateien der Nutzer verknüpft und anschließend übertragen werden.

Erfindungsgemäß wird des Weiteren ein System zum elektronischen Interagieren bereitgestellt, mit einem Netzwerk, insbesondere einem Kommunikationsnetzwerk, wobei das Netzwerk wenigstens eine einer Administratorinstanz zugeordnete Zentraleinheit aufweist und den Nutzern des Verfahrens Endeinrichtungen zugeordnet sind und wobei zur Kommunikation zwischen den Endeinrichtungen und der wenigstens einen Zentraleinheit Kommunikationskanäle des Netzwerks vorgesehen sind. Das System ist dadurch gekennzeichnet, dass die Kommunikationskanäle zur bidirektionalen Interaktionen zwischen wenigstens einer Zentraleinheit und den Endeinrichtungen ausgebildet sind, dass jedem Nutzer eine Identifikationsdatei zugeordnet ist, dass die jedem Nutzer zugeordnete Identifikationsdatei netzwerkseitig derart abgelegt ist, so dass die wenigstens eine Zentraleinheit auf die Identifikationsdateien Zugriff hat, dass Mittel zum Verknüpfen der von den Nutzern oder der Administratorinstanz erzeugten Informationsdateien mit den entsprechenden Identifikationsdateien der Nutzer vorgesehen sind und dass Mittel zum Übertragen der mit den Identifikationsdateien verknüpften Informationsdateien vorgesehen sind.

Vorteilhaft ist vorgesehen, dass das erfindungsgemäße System Mittel zur Durchführung des erfindungsgemäßen Verfahrens aufweist.

Das erfindungsgemäße Verfahren sowie das erfindungsgemäße System zeichnen sich dadurch aus, das eine Anzahl von Nutzern, denen jeweils eine Endeinrichtung zugeordnet ist, über die Endeinrichtungen in einem Netzwerk, beispielsweise einem Kommunikationsnetzwerk, kommunizieren kann. Die im Netzwerk vorhandenen Kommunikationskanäle, die je nach verwendetem Netzwerk unterschiedlich ausgestaltet sein können, werden erfindungsgemäß nunmehr für die Übermittlung und Durchführung von Interaktionen herangezogen. Mit dem AIS wird es folglich möglich, die Nutzer, beispielsweise Teilnehmer einer Veranstaltung, sinnvoll und aktiv in die Veranstaltung mit einzubeziehen. Die Kommunikation erfolgt vorteilhaft mit und/oder über wenigstens eine(r) zentrale(n) Stelle des Systems (Zentraleinheit), die einer Administratorinstanz, beispielsweise dem Moderator/Direktor/Koordinator einer Veranstaltung oder dergleichen, generell einer mit besonderen Rechten und/oder Funktionen ausgestatteten Person, zugeordnet ist.

Erfindungsgemäß ist es nunmehr möglich, dass die Nutzer des Verfahrens beziehungsweise des Systems und die wenigstens eine Administratorinstanz aktiv und vor allem bidirektional miteinander interagieren können. Im Vergleich dazu ist es gemäß der in der DE 103 07 551 A1 beschriebenen Lösung lediglich möglich, dass die Nutzer unidirektional, das heißt in einer Richtung zur Administratorinstanz (dem Abstimmungsserver) hin kommunizieren. Bei der bekannten Lösung ist eine Interaktion folglich nicht realisierbar.

Interaktionen sollen im Lichte der vorliegenden Erfindung gegenseitig aufeinander bezogene Handlungen und wechselseitige Beeinflussungen darstellen.

Insbesondere wird es möglich, die Interaktion eines Teilnehmerkreises (zum Beispiel eines Publikums) mit oder während einem exponierten Ereignis (zum Beispiel einem Kongress) zu ermöglichen. Das AIS verbessert diese Möglichkeiten durch ein reiches Angebot an geeigneten Merkmalen. Eine Reihe von nicht ausschließlichen Beispielen hierzu wird im weiteren Verlauf der Beschreibung näher erläutert.

Die Interaktion kann über die unterschiedlichsten Kommunikationskanäle stattfinden. Dabei können auch unterschiedliche Kanaltypen kombiniert werden. Beispielsweise ist es denkbar, dass es sich bei einem der Kommunikationskanäle um einen Telekommunikationskanal handelt, etwa einen Mobilfunkkanal. Ein anderer Kommunikationskanal kann ein internetbasierter Kommunikationskanal sein. In einer vorteilhaften Ausführungsform kann die Interaktion unter Verwendung eines Mobilfunkkanals, bei dem Nachrichten beispielsweise zumindest teilweise in Form von SMS verschickt werden, und einem internetbasierten Kommunikationskanal stattfinden. Bei der Internetumgebung kann es sich beispielsweise um W-LAN oder dergleichen handeln.

Nachfolgend wird die Erfindung in größerem Detail beschrieben.

Das AIS verwendet die bestehenden Kommunikationskanäle - beispielsweise SMS (Short Message Service) und http (Hypertext Transfer Protocol) - als Transportmittel für die Übermittlung der definierten Interaktionen der Nutzer an die Administratorinstanz, und jeweils umgekehrt, beispielsweise der Interaktion des Publikums mit dem Veranstalter oder dem Redner/Künstler/Moderator (je nach Art der Veranstaltung) und dergleichen. Grundsätzlich lassen sich zwei Kommunikationsrichtungen unterschieden:
Vom Nutzer (Teilnehmer) zur Administratorinstanz (Veranstalter/Künstler und dergleichen) und von der Administratorinstanz hin zum Nutzer.
Nachfolgend werden hierzu zwei Beispiele beschrieben. Ausgangslage dieser nicht ausschließlichen Beispiele soll ein von einem Veranstalter (der Administratorinstanz) durchgeführter Kongress mit einer Anzahl von Teilnehmern (Nutzern) sein.

### Teilnehmer -> Veranstalter:

Die Teilnahme an Abstimmungen per SMS setzt ein bestimmtes, vorab definiertes Format der SMS (hierbei handelt es sich um die Informationsdatei) voraus, das heißt, die SMS muss eine bestimmte Zeichenfolge enthalten, um vom AIS automatisch als gültig abgegebene Stimme erkannt zu werden. Das AIS prüft anhand der Mobilfunknummer (hierbei handelt es sich um die Identifikationsdatei beziehungsweise Teile der Identifikationsdatei), ob der Teilnehmer bereits eine Stimme zu der laufenden Abstimmung abgegeben hat. Falls dem so ist, wird diese weitere Stimme von derselben Person nicht bei der Stimmauszählung berücksichtigt. Darüber hinaus kann der Teilnehmer SMS im Freitextformat an das AIS senden. Wiederum anhand der Mobilfunknummer kann das System einer gestellten Frage bestimmte Informationen über Absender (hierbei handelt es sich um die weiter unten näher beschriebenen Attributdateien) hinzufügen, zum Beispiel im Rahmen eines Kongresses den Namen und die Institution, bei der der Teilnehmer beschäftigt ist. Voraussetzung dafür ist die Pflege der im AIS enthaltenen "Enrollment Database" (dabei handelt es sich um eine weiter unten noch näher beschriebene Datenbank).

Die Teilnahme über HTTP ist ein äquivalent behandelter, und damit alternativer Weg der Teilnahme. Dabei wird entweder ein lokales (idealerweise drahtloses Netzwerk) installiert, dessen Zugangsdaten den Teilnehmern bekannt ist, oder es wird ein geschützter Zugang zur der Veranstaltungshomepage eingerichtet, der es nicht physisch anwesenden Teilnehmern ermöglicht, durch einen Livestream die Veranstaltung zu verfolgen und bei den AIS-gestützten Interaktionen teilzunehmen. Durch ein speziell designtes Webinterface können die Teilnehmer die gleichen Funktionen nutzen wie bei der Teilnahme per SMS. Zur eindeutigen Identifikation der Teilnehmer (um die mehrfache Teilnahme an Abstimmungen zu unterbinden oder um Beiträge zu personalisieren) wird für die jeweilige Veranstaltung jedem Teilnehmer eine Identifikationsnummer (hierbei handelt es sich um die Identifikationsdatei oder zumindest Teile der Identifikationsdatei) zugewiesen.

### Veranstalter -> Teilnehmer

Über die eindeutige Zuordnung eines Mobilfunkgerätes zu einem Teilnehmer ist es möglich, Mitteilungen vom Veranstalter an den Teilnehmer zu senden. Dies können zum Beispiel Hinweise über Änderungen über den Zeitplan der Veranstaltung oder die Änderung eines bestimmten Veranstaltungsortes sein. Praktisch kann dies bei großen Kongressen zur Anwendung kommen, bei denen zeitlich parallel verschiedene Vorträgen und Workshops abgehalten werden. Ändert sich nun der Veranstaltungsort eines Workshops, können via AIS ausschließlich die Teilnehmer dieses einen Workshops mittels einer SMS informiert werden.

Weitere Anwendungen sind beispielsweise die Übermittlung angefragter Kontaktdaten eines oder mehrer Redner via SMS oder die Information über die Beendigung einer Unterbrechung der Veranstaltung. Dadurch sind die Teilnehmer nicht mehr gezwungen, sich ständig am Veranstaltungsort aufzuhalten, um die Wiederaufnahme der Veranstaltung nicht zu verpassen.

Insbesondere die vielfach automatisierte Informationsverarbeitung durch das AIS (zum Beispiel bei Abstimmungen) bedeutet eine erhebliche Effizienzsteigerung hinsichtlich theoretisch denkbaren, anderen Modellen, bei denen jegliche Auswertung manuell durchgeführt werden muss.

Die vorliegende Erfindung ist nicht auf bestimmte Ausgestaltungsvarianten des Netzwerks beschränkt. Beispielsweise kann das Netzwerk als singuläres (nur ein Netzwerktyp) oder als hybrides (zwei oder mehr Netzwerktypen) ausgebildet sein. Bei einer Netzwerkkomponente kann es sich beispielsweise um eine Telekommunikationsnetzwerk-Komponente handeln. Eine andere Netzwerkkomponente kann beispielsweise als internetbasierte Kommunikationsnetzwerk-Komponente ausgebildet sein.

Bei dem vorstehend beschriebenen Netzwerk handelt es sich vorteilhaft um ein hybrides Netzwerk. Selbstverständlich sind auch andere Formen von Netzwerken möglich. Ein vorteilhaftes Einsatzfeld der Erfindung liegt in der Durchführung von Konferenzen oder hierzu ähnlichen Veranstaltungen. Auch hier sind natürlich auch andere Einsatzmöglichkeiten denkbar, so dass die Erfindung nicht auf die hier beschriebenen Beispiele beschränkt ist. Das AIS kann insbesondere bei jeder Art von Präsentation eingesetzt werden, bei der eine Interaktion zwischen einer oder mehreren präsentierenden Person(en) (Administratorinstanzen), zum Beispiel einem Künstler, einem Redner, einem Moderator oder jeder anderen Form von präsentierenden Personen und den Teilnehmern (Nutzern), beispielsweise einem Publikum, möglich ist.

Mit der vorliegenden Erfindung wird beispielsweise die Möglichkeit geschaffen, dass eine Gruppe von Personen eine gemeinsame reelle und/oder virtuelle Präsentation, eine sensitiv wahrnehmbare Erfahrung oder dergleichen über eine technische Installation, das erfindungsgemäße System und/oder das erfindungsgemäße Verfahren, beeinflusst. Zu denken ist hier beispielsweise an Theater, eine Sportveranstaltung, Kino, Marktplatz oder jede Art eines Ereignisses, das vor einem Publikum, insbesondere vor einem großen Publikum, stattfindet. Die Personen sind dabei reelle Zeugen/Teilnehmer des Ereignisses. Zugelassene Personen können über eine technische Einrichtung am Ablauf der exponierten Präsentation oder der sensitiv wahrnehmbaren Erfahrung partizipieren, beispielsweise durch Beurteilen, Entscheiden, durch Anregungen geben und dergleichen.

Durch die vorliegende Erfindung wird unter anderem eine technische Einrichtung für die oben genannte Art der Aktivitäten bereitgestellt, die einfach zu bedienen, flexibel und anpassbar ist. Die vorliegende Erfindung integriert Multi-Modale Möglichkeiten der Benutzerinteraktion, insbesondere in mobiler Weise und ohne Festlegung auf einen fixen Standort bei der Interaktion. Die vorliegende Erfindung, insbesondere das AIS, bildet eine grundsätzliche Architektur, die in verschiedene Anwendungsgebiete transferiert werden kann. Dabei ist insbesondere ein vollständig neuer generischer Anbindungstyp einer Interaktion in Netzwerken, insbesondere in zukünftigen, in der Regel drahtlosen Netzwerkarchitekturen, realisierbar. Bei solchen Netzwerkarchitekturen handelt es sich beispielsweise um GPRS (General Packet Radio Service), WLAN (Wireless Local Area Network), UMTS (Universal Mobile Telecommunications System), Bluetooth und dergleichen.

Nachfolgend werden einige Anwendungsbeispiele für die vorliegende Erfindung beschrieben.

Vorteilhaft kann für die Nutzer wenigstens eine nutzerspezifische Attributdatei erzeugt werden, wobei die Attributdatei(en) mit der Identifikationsdatei des Nutzers zu einer Profildatei verknüpft wird/werden und wobei die Profildateien aller Nutzer zumindest zeitweilig in einer Datenbank abgelegt werden.

Beispielsweise ist damit eine personalisierte Teilnahme an einer Veranstaltung möglich.

In einem solchen Fall kann jeder Teilnehmer in einer bestimmten Datenbank (Enrollment Database-DB) registriert sein. Diese DB unterhält verschiedene Attributdateien der Nutzer, zumindest wenigstens eine Attributdatei der Nutzer" beispielsweise den Namen des Teilnehmers, die Firma des Teilnehmers und dergleichen. Eine numerische Identifizierung (Identifikationsdatei) kann dieser DB hinzugefügt werden. Das kann beispielsweise kontinuierlich mit mehrstelligen Zahlen erfolgen, wobei beispielsweise die erste Zahl einige kategorische Informationen tragen kann. Dies soll anhand eines Beispiels erläutert werden.

Beispielsweise sind dreihundert Teilnehmer für einen Kongress registriert. Die erste Zahl des numerischen Identifizierers trägt die Informationen, zu welchem Industriezweig der Teilnehmer gehört. Die zweite und dritte Zahl kann dann automatisch vergeben werden.

Die Personalisierung beschreibt das Hinzufügen von Registrierungsdetails, beispielsweise den Namen, die Registrierungsnummer, das Unternehmen, die Position und dergleichen, beispielsweise zu einer Liste, bei der es sich um eine Rednerliste, eine Liste zur Stellung von Fragen, eine Liste zur Abgabe von Kommentaren und dergleichen handeln kann. Der personalisierte Teilnehmer kann dann selbst während des Ereignisses noch entscheiden, ob er am AIS teilnehmen will.

Eine moderatorähnliche Person (die Administratorinstanz), beispielsweise der Direktor des Kongresses beziehungsweise des Systems, verfügt dann über eine Datenbasis, die Profilinformationen von jedem der Teilnehmer enthält.

Vorteilhaft kann dazu vorgesehen sein, dass die netzwerkseitig abgelegten Identifikationsdateien und/oder die Datenbank mit den Profildaten in wenigstens einer Zentraleinheit, oder in einer davon separaten Speichereinrichtung, mit der die Zentraleinheit zumindest zeitweilig kommuniziert, abgespeichert werden.

Das System umfasst somit zunächst eine Liste von Registrierungsdetails für jeden Teilnehmer. Weiterhin identifiziert das System die Teilnehmer, beispielsweise auf der Basis ihrer Registrierungsnummer und/oder ihres Namens und/oder ihres numerischen Identifizierers, also der Identifikationsdatei. Das System kann auch einen anonymen Account umfassen, wenn dies der Teilnehmer wünscht.

Der Teilnehmer kann über seine Endeinrichtung, beispielsweise ein Mobiltelefon oder dergleichen, entscheiden, ob er an dem System teilnehmen will. Wenn dies der Fall ist, wird die Mobilfunknummer ebenfalls der DB hinzugefügt und fungiert in dieser Form als numerischer Identifizierer (Identifikationsdatei).

Natürlich ist auch eine Teilnahme über das Internet möglich. Bei dieser Ausführungsform muss der Teilnehmer jedes Mal seinen persönlichen Identifizierer (Identifikationsdatei) eingeben, wenn er beispielsweise eine Frage stellen will, einen Kommentar abgeben will, wenn er sich in die Rednerliste aufnehmen will oder dergleichen.

Vorteilhaft kann ein Nutzer eine Informationsdatei in seiner Endeinrichtung erzeugen, wobei die Informationsdatei in der Endeinrichtung mit der Identifikationsdatei des Nutzers verknüpft und anschließend an wenigstens eine Zentraleinheit übertragen wird und wobei in der Zentraleinheit die eingehende Identifikationsdatei mit den netzwerkseitig abgelegten Identifikationsdateien verglichen und bei Übereinstimmung die übertragene Informationsdatei in der Zentraleinheit weiterverarbeitet wird.

In weiterer Ausgestaltung kann vorgesehen sein, dass bei Übereinstimmung von Identifikationsdateien die Informationsdatei um wenigstens eine Attributdatei des entsprechenden Nutzers ergänzt wird.

Mit dem erfindungsgemäßen Verfahren beziehungsweise dem erfindungsgemäßen System ist es auch möglich, dass ein Teilnehmer eine Aussage während einer Präsentation, einen Teil des Events an sich oder dergleichen kommentiert. Der Teilnehmer (Nutzer) gibt den Kommentar (Informationsdatei) in seine Endeinrichtung ein, einschließlich seiner Registrierungsnummer (Identifikationsdatei). Anschließend sendet der Teilnehmer den Kommentar an das System. Das System identifiziert den Teilnehmer und fügt dem Kommentar Registrierungsdetails (Attributdatei(en)) hinzu. Das System zeigt den Kommentar einschließlich der Registrierungsdetails dem Direktor (Administratorinstanz) an, der anschließend das Layout, die Zielgruppe, den Zeitpunkt des Kommentars und dergleichen auswählt.

Das Abgeben eines Kommentars ist dabei nicht auf bestimmte Formate beschränkt, es kann sich beispielsweise um einen freien Text handeln. Es ist nicht unbedingt erforderlich, dass das System die Kommentare automatisch bearbeitet, und/oder dem Direktor zustellt. Der Direktor kann die Reaktion bearbeiten, zu Gesamtdateien zusammenfügen und dergleichen. Jeder Kommentar wird vorzugsweise durch das System automatisch gespeichert und archiviert, ganz egal, wann und ob er veröffentlicht worden ist.

Vorteilhaft ist vorgesehen, dass die von den Endeinrichtungen übertragenen Informationsdateien in einer netzwerkseitig vorgehaltenen Speichereinrichtung, auf die die wenigstens eine Zentraleinheit Zugriff hat, zumindest zeitweilig abgespeichert sein. Hierbei kann es sich um dieselbe Speichereinrichtung handeln, die weiter oben bereits beschrieben wurde. Natürlich kann es sich auch um eine dazu separate Speichereinrichtung handeln. Die Speichereinrichtung kann Bestandteil der Zentraleinheit sein oder aber separat zu dieser ausgebildet sein.

Bei der Zentraleinheit kann es sich beispielsweise um eine zentrale Rechnereinheit mit einer oder mehreren Rechnereinrichtungen handeln.

Auch ist es mit der vorliegenden Erfindung möglich, dass ein Teilnehmer Fragen stellt. Bereits während einer Präsentation kann der Teilnehmer dem Darsteller/Vortragenden - ähnlich wie in einer Diskussion - Fragen stellen. Dazu tippt der Teilnehmer (Nutzer) die Frage (Informationsdatei) in seine Endeinrichtung, einschließlich seiner Registrierungsnummer (Identifikationsdatei) ein, und sendet diese Frage an das System. Das System identifiziert den Teilnehmer und fügt der Frage Registrierungsdetails (Attributdatei(en)) hinzu. Das System zeigt die Frage dem Direktor (Administratorinstanz) an, der das Layout, die Zielgruppe, den Zeitpunkt der Frage und dergleichen auswählen kann. Auch das Stellen einer Frage ist nicht auf bestimmt Formate beschränkt.

Ähnlich wie weiter oben beschrieben, wird jede Frage vorzugsweise automatisch im System gespeichert und archiviert, egal wann sie gestellt worden ist.

Mit der vorliegenden Erfindung ist ebenfalls möglich, dass ein Teilnehmer einen Platz auf einer Rednerliste bucht, beispielsweise um einen Kommentar zu einer Präsentation abzugeben, um zusätzliche Informationen hinzuzufügen und dergleichen. Auch ist das System in der Lage, dass spontane Reaktionen von Teilnehmern und damit unbekannte Zeitpunkte auf einer Rednerliste beherrschbar sind.

Um sich auf die Rednerliste setzen zu lassen, tippt der Teilnehmer (Nutzer) einen entsprechenden Wunsch (Informationsdatei) in seine Endeinrichtung ein und sendet diesen an das System. Das System identifiziert den Teilnehmer und fügt dem Redewunsch die entsprechenden Registrierungsdetails (Attributdatei(en)) hinzu. Das System zeigt dem Direktor (Administratorinstanz) den Wunsch an, beispielsweise gemeinsam mit entsprechenden Profilinformationen über den Teilnehmer.

In Abhängigkeit von der Anzahl der Anfragen für die Rednerliste und dem zur Verfügung stehenden Zeitraum für die Aussprache kann das System, vorzugsweise automatisch, eine individuelle Zeitspanne für jeden Redner berechnen. Der Direktor antwortet dem Teilnehmer direkt, ob er auf die Rednerliste aufgenommen worden ist und wann in etwa dessen Redebeitrag stattfinden wird.

Um auf die Rednerliste gesetzt zu werden, kann der Teilnehmer beispielsweise eine Nachricht an das System senden, die das "Wort Rednerliste" enthält. Die Identifikation der Person läuft automatisch über den Identifizierer ab. Das System enthält ebenfalls die vorgegebene Agenda. Der Direktor kann beispielsweise einen bestimmten Standardzeitraum vorgeben, der jedem eingehenden Redewunsch zugeordnet wird. Wenn dies geschehen ist, sieht der Direktor die kalkulierte Gesamtzeit für die ausgewählte Rednerliste und kann, sofern der Rahmen der Agenda überschritten würde, mögliche Kollisionen mit der Agenda bereits frühzeitig aus dem Weg räumen, etwa indem die Redezeit für jeden Redner automatisch gekürzt wird.

Mittels der vorliegenden Erfindung ist aber auch die anonyme Teilnahme an einer Veranstaltung möglich. Um vielfache Reaktionen von ein und demselben Teilnehmer zu vermeiden, kann beispielsweise vorgesehen sein, dass das System nur eine Reaktion von jedem Teilnehmer zulässt. Der Inhalt der Reaktion wird vorzugsweise separat gespeichert.

Auf diese Weise ist es beispielsweise möglich, dass mittels der Erfindung auch Abstimmungen durchgeführt werden. Derartige Abstimmungen geben den Teilnehmern sehr schnell ein gutes Feedback. Aus diesem Grund ist die Handhabung einer Abstimmungsprozedur ein wesentliches Merkmal der vorliegenden Erfindung. Zu diesem Zweck kann der Vortragende oder der Direktor (Administratorinstanz) die Teilnehmer (Nutzer) der Veranstaltung zu einer Abstimmung aufrufen. Der Teilnehmer gibt seine Abstimmung (Informationsdatei), beispielsweise über ein Multiple-Choice-Menü, in seine Endeinrichtung ein und schickt diese Abstimmung an das System. Das System sammelt alle abgegebenen Abstimmungen und präsentiert das Ergebnis an den Direktor. Der Direktor wählt das Layout, die Zielgruppe, den Zeitpunkt der Ergebnisse und dergleichen aus. Die Abstimmungen sind vorzugsweise in einem Multiple-Choice-Format gehalten. Vorzugsweise ist nur eine Antwort pro Teilnehmer möglich. Je nach Art der Frage kann der Teilnehmer aus mehreren möglichen Antworten auswählen. Die Auswahl erfolgt vorzugsweise durch Angabe von Nummern, was eine möglichst fehlerfreie Auswahl ermöglicht. Wenn es sich bei der Endeinrichtung um ein Mobiltelefon handelt, kann die Auswahl auch über das Drücken bestimmter vorgegebener Tasten des Telefons stattfinden. Die Darstellung der Endergebnisse kann beispielsweise in geeigneter Form erfolgen, beispielsweise in Form von Balkendiagrammen, Kuchendiagrammen und dergleichen.

Neben der Möglichkeit, mit der Erfindung Abstimmungen durchzuführen, ist es natürlich auch möglich, dass damit Umfragen durchgeführt werden. Die Durchführung von Umfragen erfolgt vorzugsweise auf ähnliche Weise wie die Durchführung von Abstimmungen, sodass diesbezüglich auf die vorstehenden Ausführungen Bezug genommen und verwiesen wird.

Vorteilhaft kann vorgesehen sein, dass von wenigstens einer Administratorinstanz in einer dieser zugeordneten Endeinrichtung eine Informationsdatei erzeugt wird, dass die Informationsdatei mit der/den Identifikationsdatei(en) eines oder mehrerer Adressatnutzer verknüpft und an die Endeinrichtung(en) des/der jeweiligen Adressatnutzer(s) übertragen wird/werden und dass die Informationsdatei(en) in der/den Endeinrichtung(en) dargestellt und/oder abgespeichert und/oder weiterverarbeitet wird/werden.

Vorzugsweise kann auch vorgesehen sein, dass die in der Zentraleinheit eingegangenen und/oder bearbeiteten Informationsdateien auf wenigstens einer Anzeigeinrichtung zumindest zeitweilig dargestellt und/oder an die Endeinrichtung(en) zumindest eines Nutzers übertragen werden.

Um die mit Hilfe der Erfindung stattfindende Kommunikation der Gesamtheit der Teilnehmer auch in geeigneter Weise darstellen zu können, ist vorteilhaft vorgesehen, dass besondere Anzeigeeinrichtungen für das jeweils stattfindende Ereignis vorgesehen sind. Dabei kann vorgesehen sein, dass eine einzige Anzeigeeinrichtung vorhanden ist, auf der alle unterschiedlichen Informationsarten zentral angezeigt werden. Selbstverständlich sind auch zwei oder mehrere Anzeigeeinrichtungen denkbar, sodass jede Anzeigeeinrichtung nur jeweils Teile von Informationen oder aber für bestimmte Personen oder Personengruppen relevante Informationen anzeigt.

Beispielsweise kann für das Auditorium eine Anzeigeeinrichtung vorgesehen sein, auf der beispielsweise die letzten Abstimmungsergebnisse oder Umfrageergebnisse, mögliche Fragen, Kommentierungen und dergleichen angezeigt werden.

Zusätzlich kann es beispielsweise eine Anzeigeeinrichtung für die Administratorinstanz (zum Beispiel den Moderator, den Direktor oder Vorsitzenden der Veranstaltung) geben, in der zusätzlich noch bestimmte Nummern und Kategorien von Rednerlisten, Listen von Kommentaren, Listen von Fragen und dergleichen dargestellt sind. Darüber hinaus kann es auch eine Anzeigeeinrichtung für diejenige Person geben, die gerade einen Vortrag hält beziehungsweise etwas präsentiert. Auf dieser Anzeigeeinrichtung können für den jeweils Vortragenden spezifische Informationen, wie beispielsweise verbleibenden Rednerzeit und dergleichen angezeigt werden.

Schließlich ist vorteilhaft auch eine Hauptanzeigeeinrichtung vorgesehen, auf der die jeweils stattfindende Hauptpräsentation oder dergleichen dargestellt wird.

Die Endeinrichtung, die der Administratorinstanz, etwa dem Moderator, Direktor oder dergleichen eines Ereignisses zugeordnet ist, soll vorteilhaft einige fundamentale Funktionen ausführen können. Zum einem soll über diese Endeinrichtung ein Zugang zu der "Enrollment Database" möglich sein. Ebenso kann auf dieser Endeinrichtung eine Zeituhr sichtbar sein. Der Moderator/Direktor (nachfolgend als Synonym für die Administratorinstanz verwendet) kann dann unterschiedliche oder zusätzliche Anzeigeeinrichtungen auswählen, um diese Zeituhr zu veröffentlichen, beispielsweise in Form einer verbliebenen Redezeit für den gerade aktiven Sprecher oder dergleichen. Weiterhin sollte ausreichend Speicherkapazität für unveröffentlichte Reaktionen oder dergleichen zur Verfügung stehen.

Mit Hilfe des erfindungsgemäßen Verfahrens beziehungsweise des erfindungsgemäßen Systems ist es möglich, alle Arten von Reaktionen durch die Teilenehmer (Nutzer) zu sammeln, wobei dem Moderator/Direktor (Administratorinstanz) ausreichend Möglichkeit verbleibt, die weitere Veranstaltung zu beeinflussen. Zu diesem Zweck senden die Teilnehmer ihre Reaktionen (Informationsdateien) an das System. Das System sammelt die Reaktionen und fügt das Profil (Profildatei/Attributdatei(en)) des jeweiligen Teilnehmers den Fragen und Kommentaren hinzu. Das System zeigt dem Direktor/Moderator das zur Veröffentlichung von Abstimmungen und Umfragen zu verwendende Layout an. Das System zeigt dem Direktor/Moderator Fragen und Kommentare in chronologischer Reihenfolge an. Der Direktor kann einer oder mehreren Reaktionen bestimmte Kategorien zuordnen. Das System speichert alle Reaktionen zum Zwecke weiterer Analysen und Prozesse, beispielsweise in den jeweiligen Kategorien, ab.

In Abhängigkeit von der Art der Reaktion und dem Zeitpunkt, wann diese Reaktion gesendet wurde, muss der Moderator/Direktor die eingehenden Daten bearbeiten. Der Direktor/Moderator kann eingehende Reaktionen bearbeiten und mehrere ähnliche Reaktionen zu einer einzigen Gesamtreaktion zusammenfassen. Der Direktor/ Moderator kann diese Reaktionen veröffentlichen, während das System automatisch personalisierende Elemente der jeweiligen Teilnehmer hinzufügt. Das System kann weiterhin weitere Informationen beziehungsweise Daten oder Aussagen des Direktors/Moderators zu den entsprechenden Reaktionen hinzufügen. Vorzugsweise werden sowohl die Originalreaktionen als auch die bearbeiteten Reaktionen abgespeichert.

Dazu zeigt das System dem Moderator/Direktor die gesammelten Reaktionen an. Der Direktor/Moderator sammelt beziehungsweise summiert ähnliche Reaktionen, die beispielsweise durch ähnliche bestimmte Kategorien gekennzeichnet sind. Der Direktor/Moderator hat die Möglichkeit einen statistischen Prozess für die ausgewählten Punkte zu starten. Das System speichert die auf diese Weise erzeugten Resultate, wobei der Direktor/Moderator ebenfalls die Möglichkeit hat, diese Resultate zu veröffentlichen.

Dabei kann der Direktor/Moderator - vorzugsweise aus einem bestimmten Menü - auswählen, wie mit jeder einzelnen Reaktion, beziehungsweise wie mit den Daten verfahren werden soll. So ist es beispielsweise möglich, eine Reaktion von Seiten des Direktors/Moderators zu erzeugen. Ebenso ist es möglich, dass die Reaktion veröffentlicht wird, beispielsweise für die gesamte Teilnehmerschafft, für die jeweils gerade präsentierende Person oder dergleichen. Ebenso kann natürlich auch vorgesehen sein, dass die Reaktionen nicht veröffentlicht, sondern nur gespeichert werden.

Alle Reaktionen, Kommentare, Antworten, Abstimmungen, Umfragen und dergleichen werden durch das System vorzugsweise automatisch bearbeitet. Der Direktor/Moderator sieht statistische Daten und kann beispielsweise aus verschiedenen vorgefertigten Layouts aufwählen, wie diese dargestellt werden sollen.

Dabei hat der Direktor/Moderator sowohl bezüglich des Layouts als auch bezüglich des Kanals der dargestellten Reaktionen zu entscheiden.

Wie weiter oben bereits beschrieben wurde, ist das System vorteilhaft mit mehreren Anzeigeeinrichtungen, beispielsweise für die Teilnehmerschafft, den jeweils Vortragenden, den Direktor/Moderator und dergleichen ausgestattet.

Darüber hinaus kann der Direktor/Moderator individuelle Nachrichten an einzelne oder mehrere Endeinrichtungen der Teilnehmer schicken.

Dazu wählt der Direktor/Moderator zunächst aus, wem eine bestimmte Reaktion, eine bestimmte Anweisung oder dergleichen zugestellt beziehungsweise angezeigt werden soll. Der Direktor/Moderator wählt zunächst die Adressatengruppe aus, indem er beispielsweise den Namen der jeweils in Frage kommenden Anzeigeeinrichtung auswählt oder aber indem - im Falle von individuellen Nachrichten - einzelne Endeinrichtungen adressiert. Wenn es sich bei den Endeinrichtungen um Mobiltelefone handelt, kann er hierzu beispielsweise die erforderlichen Mobilfunknummern auswählen.

Anschließend wählt der Direktor/Moderator das geeignete Layout aus, sodass das System anschließend die entsprechenden Informationen den ausgewählten Personen in dem festgelegten Layout anzeigt.

Dazu kann die Endeinrichtung des Direktors/Moderators in besonderer Weise ausgebildet sein. Zunächst ist es für den Direktor/Moderator mit Hilfe seiner Endeinrichtung möglich, die bearbeiteten Reaktionen an die jeweils ausgewählten Anzeigeeinrichtungen zu übertragen. Über die Endeinrichtung des Direktors ist es vorzugsweise auch möglich, dass er Nachrichten für bestimmte Teilnehmer erzeugen und anschießend an diese übertragen kann.

Eine solche individuelle Nachricht kann neben den eigentlichen Inhalten auch zusätzliche Informationen über andere Teilnehmer enthalten. So ist es beispielsweise denkbar, dass der Teilnehmer eine Anfrage zu einer bestimmten gerade vortragenden Person an den Direktor/Moderator absendet. Der Direktor/Moderator beantwortet diese Frage und kann zusätzlich noch die jeweilige Person betreffende, zusätzliche Informationen anhängen. Aus diesem Grund ist vorzugsweise vorgesehen, dass der Direktor/Moderator Zugriff auf die "Enrollment Database" hat.

Die Endeinrichtung des Direktors/Moderators kann zusätzlich eine Funktion enthalten, dass die abzusendenden Informationsdaten vor ihrer Absendung zunächst abschließend noch einmal zumindest betrachtet werden können.

Vorteilhaft kann aus zumindest einzelnen der in der Zentraleinheit eingegangenen und/oder bearbeiteten Informationsdateien wenigstens eine Reportdatei erzeugt werden.

Am Ende einer Veranstaltung kann der Direktor/Moderator beispielsweise einen Report aus allen gesammelten Reaktionen generieren. Dieser Report kann anschließend über einen geeigneten Publikationskanal, beispielsweise in gedruckter Form, über eine Webseite oder dergleichen, veröffentlicht werden. Dabei kann vorgesehen sein, dass der zu erstellende Report nur bestimmte Bestandteile der Gesamtinformation enthält. So ist es beispielsweise denkbar, nur Informationen einer bestimmten Kategorie in einem Report zu verwerten.

Vorteilhaft kann auch vorgesehen sein, dass zumindest einzelne während der Durchführung des Verfahrens erzeugte Daten oder Dateien mit einem Kategorie-Tag verknüpft werden.

Wie weiter oben bereits erwähnt wurde, kann vorzugsweise vorgesehen sein, dass alle während einer Veranstaltung erzeugten und übertragenen Daten mit entsprechenden Kategoriedaten, den sogenannten Kategorie-Tags versehen werden. Damit wird die Zuordnung einer Information zu einer bestimmten Kategorie besonders einfach ermöglicht. Wenn nun ein entsprechender, Kategorie bezogener, Report erstellt werden soll, werden von dem System lediglich solche Informationen berücksichtigt, die den entsprechenden Kategorie-Tag aufweisen.

Mittels der vorliegenden Erfindung ist es beispielsweise auch möglich, dass die Teilnehmer einer Veranstaltung Einfluss auf den Veranstaltungsablauf nehmen können.

Dies soll am Beispiel einer Tagesordnung näher erläutert werden. Der Direktor/Moderator kann über seine Endeinrichtung bei den Teilnehmern deren bevorzugte Tagesordnungspunkte erfragen. Die Teilnehmer suchen ihre Favoriten - insbesondere aus einer vorgegebenen Auswahlliste - aus und senden ihre Auswahl zurück an das System. Das System bearbeitet, vorzugsweise automatisch, alle ausgewählten Tagesordnungspunkte und erstellt die am meisten gewünschte Agenda.

Eventuelle Abstimmungsergebnisse, Umfragen und dergleichen bezüglich der Agenda können direkt berücksichtigt werden und führen zu einer automatischen Anpassung der Tagesordnung.

Unter Verwendung der vorliegenden Erfindung ist es darüber hinaus auch möglich, dass der Direktor/Moderator den Teilnehmern bestimmte Signale gibt. So ist es beispielsweise denkbar, dass der Direktor/Moderator den Teilnehmern oder ausgewählten Teilnehmern ein Signal sendet, dass ein bestimmtes Ereignis beginnt oder fortgeführt wird. Dazu sendet der Direktor/Moderator ein entsprechendes Signal an das System. Das System informiert alle Teilnehmer, dass das Ereignis fortgeführt wird.

Dazu kann das System beispielsweise eine Signaluhr aufweisen, die so eingestellt werden kann, dass sie die Teilnehmer an die Fortführung des Ereignisses erinnert. Wenn es sich bei den Endeinrichtungen der Teilnehmer um Mobiltelefone handelt, kann beispielsweise auch vorgesehen sein, dass die Erinnerung dadurch erfolgt, dass die entsprechenden Mobiltelefone angerufen werden.

Dies soll anhand eines Beispiels erläutert werden. Wenn eine Veranstaltung beispielsweise durch eine Kaffeepause unterbrochen worden ist, kann das System derart eingestellt sein, dass ein erstes Signal gesendet wird, fünf Minuten bevor das Ereignis weitergeht. Ein zweites Signal könnte dann dreißig Sekunden vor Wiederbeginn des Ereignisses gesendet werden. Das System kann diese Zeitmarken beispielsweise automatisch festlegen, etwa in Abhängigkeit von der Agenda. Dazu kann beispielsweise vorgesehen sein, dass der Direktor/Moderator die entsprechenden Zeitmarken vorgibt, wenn er das System vor Beginn einer Veranstaltung initiiert. Ebenso ist es natürlich auch möglich, dass die entsprechenden Zeitmarken individuell verändert werden können, nachdem die Veranstaltung bereits begonnen hat.

Mittels des erfindungsgemäßen Verfahrens ist es für einen Teilnehmer möglich, ein Feedback wesentlich flexibler und zu einem Zeitpunkt zu geben, wenn eine entsprechende Stellungnahme möglich ist. Mit der Erfindung ist es auch möglich, dass ein Teilnehmer ein Feedback, Vorschläge für Verbesserungen und dergleichen auch noch geben kann, wenn die Veranstaltung bereits einige Tage vorüber ist.

Dazu kann beispielsweise vorgesehen sein, dass der Teilnehmer einen bestimmten Fragebogen - vorzugsweise in elektronischer Form - zugestellt bekommt, den er dann in entsprechender Weise ausfüllt. Dazu aktiviert sich der Teilnehmer zunächst in dem System. Anschließend wird der Teilnehmer mit einer digitalen Kopie des Fragebogens versorgt. Der Teilnehmer wird durch eine fragende Person gefragt, sein Feedback zu geben. Der Teilnehmer gibt sein Feedback zu einem bestimmten Punkt und meldet sich anschließend aus dem System ab.

Wie weiter oben beschrieben wurde, ist es möglich, dass einzelne Daten mit bestimmten Kategorie-Tags versehen werden. Dies macht deren Zuordnung während und nach einer Veranstaltung, beispielsweise zum Erstellen bestimmter Reports oder dergleichen, einfacher. Derartige Kategorie-Tags können beispielsweise von dem System automatisch, oder aber von dem Direktor/Moderator individuell erzeugt werden. Insbesondere ist es dem Direktor/Moderator vorteilhaft möglich, neue Kategorie-Tags zu erzeugen, bevor das System eingesetzt wird. Natürlich soll es auch möglich sein, dass neue Kategorie-Tags erzeugt beziehungsweise bestehende Kategorie-Tags verändert werden, während sich das System bereits in Verwendung befindet. Dazu kann beispielsweise vorgesehen sein, dass der Direktor/Moderator zunächst einen Kategorie-Dialog öffnet und anschließend eine entsprechende Funktion (Hinzufügen und/oder Ändern einer Kategorie) auswählt. Der Direktor/Moderator benennt die neue Kategorie beziehungsweise gibt ihr einen entsprechenden Umfang. Diese neue Kategorie wird anschließend im System abgespeichert und steht fortan zu jeder Zeit zur Verfügung.

Durch die vorliegende Erfindung wird ein Interaktionssystem für eine Teilnehmergruppe geschaffen, mit dem es auf konstruktiv einfache Weise möglich wird, Interaktionen während eines Events, das nicht auf bestimmte Eventtypen beschränkt ist, möglichst zeitnah durchzuführen und zu steuern.

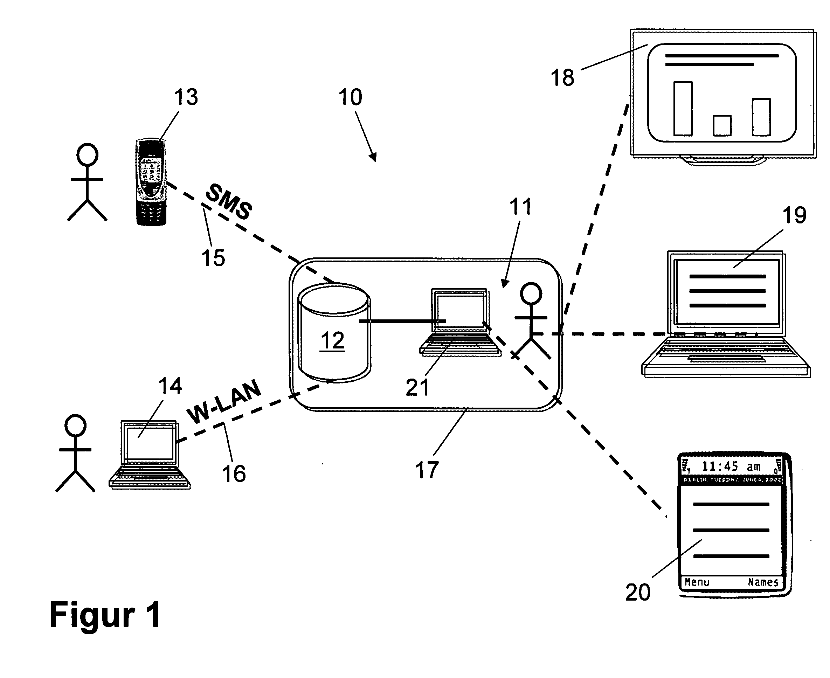

Die Erfindung wird nun anhand eines Ausführungsbeispiels unter Bezugnahme auf die beiliegende Zeichnung näher erläutert. Dabei ist in der einzigen Figur 1 schematisch ein erfindungsgemäßes System dargestellt, auf dem das erfindungsgemäße Verfahren zur elektronischen Interaktion in einem Netzwerk ablaufen kann.

Ausgangslage dieses Ausführungsbeispiels soll ein von einem Veranstalter durchgeführter Kongress mit einer Anzahl von Teilnehmern sein. Das Verfahren läuft in einem Kommunikationsnetz 10 ab, bei dem es sich im Beispiel um ein hybrides Netzwerk handelt, bestehend aus einer Telekommunikationsnetzwerk-Komponente sowie einer internetbasierten Kommunikationsnetzwerk-Komponente.

Die Kongresszentrale 17 wird durch eine Administratorinstanz 11 gebildet, bei der es sich um den Direktor, Moderator oder dergleichen des Kongresses handeln kann. Dieser Administratorinstanz 11 ist eine Endeinrichtung 21 zugeordnet, bei der es sich im Beispiel um eine Rechnereinrichtung handelt.

Die Nutzer des Systems beziehungsweise des Verfahrens sind die Teilnehmer des Kongresses und verfügen ebenfalls über ihnen zugeordnete Endeinrichtungen 13, 14. Diese Endeinrichtungen können je nach verwendetem Kommunikationsnetzwerktyp unterschiedlich ausgestaltet sein. Im vorliegenden Beispiel handelt es sich bei einer dargestellten Endeinrichtung 13 um ein Mobiltelefon, während die Endeinrichtung 14 in Form einer Rechnereinrichtung ausgebildet ist.

Die einzelnen Endeinrichtungen 13, 14, 21 können erfindungsgemäß aktiv und vor allem bidirektional miteinander interagieren. Dazu ist eine Zentraleinheit 12 vorgesehen, mit der die einzelnen Endeinrichtungen 13, 14, 21 kommunizieren können.

Die Interaktion kann über die unterschiedlichsten Kommunikationskanäle 15, 16 stattfinden. Dabei können auch unterschiedliche Kanaltypen kombiniert werden. Im vorliegenden Beispiel handelt es sich bei einem der Kommunikationskanäle 15 um einen Telekommunikationskanal, etwa einen Mobilfunkkanal, bei dem Nachrichten beispielsweise zumindest teilweise in Form von SMS verschickt werden Ein anderer Kommunikationskanal 16 kann ein internetbasierter Kommunikationskanal sein. Bei der Internetumgebung kann es sich beispielsweise um W-LAN oder dergleichen handeln.

Das erfindungsgemäße System beziehungsweise das erfindungsgemäße Verfahren verwendet die bestehenden Kommunikationskanäle 15, 16 als Transportmittel für die Übermittlung der definierten Interaktionen der Teilnehmer an die Administratorinstanz 11, und jeweils umgekehrt. Dabei lassen sich zwei Kommunikationsrichtungen unterschieden:
Vom Nutzer (Teilnehmer) zur Administratorinstanz (Veranstalter/Künstler und dergleichen) und von der Administratorinstanz hin zum Nutzer.
Wenn der Nutzer mit der Administratorinstanz kommunizieren und eine Information von seiner Endeinrichtung 13, 14 an die Zentraleinheit übermitteln möchte, erstellt der Nutzer auf seiner Endeinrichtung 13, 14 zunächst eine Informationsdatei. Weiterhin verfügt der Nutzer über eine diesen identifizierende und charakterisierende Identifikationsdatei. Diese Identifikationsdatei ist ebenfalls auf Seiten des Netzwerks 10 abgelegt, so dass die Zentraleinheit 12 Zugriff auf die Identifikationsdateien hat. Die vom Nutzer erzeugte Informationsdatei wird in dessen Endeinrichtung 13, 14 mit der Identifikationsdatei verknüpft und über den entsprechenden Kommunikationskanal 15, 16 an die Zentraleinheit 12 übertragen und dort je nach Art und Weise der Informationsdatei weiterverarbeitet.
Damit wird es den Nutzern beispielsweise möglich, an Abstimmungen teilzunehmen, Kommentare an die Zentraleinheit 12 zu übertragen, Fragen zu gerade laufenden Vorträgen/Präsentationen zu übermitteln, einen Wunsch zur Aufnahme in eine Rednerliste zu übertragen und dergleichen. In der Zentraleinheit 12 werden die eingehenden Informationsdateien der Teilnehmer von der Administratorinstanz 11 in entsprechender Weise weiterverarbeitet.
Über die eindeutige Zuordnung einer Endeinrichtung 13, 14 zu einem Teilnehmer ist es auch möglich, Mitteilungen von der Administratorinstanz 11 an die Endeinrichtungen 13, 14 der Nutzer zu senden. Dies können zum Beispiel Hinweise über Änderungen über den Zeitplan der Veranstaltung oder die Änderung eines bestimmten Veranstaltungsortes sein. Praktisch kann dies bei großen Kongressen zur Anwendung kommen, bei denen zeitlich parallel verschiedene Vorträgen und Workshops abgehalten werden. Ändert sich nun der Veranstaltungsort eines Workshops, können via Zentraleinheit 12 ausschließlich die Teilnehmer dieses einen Workshops mittels einer SMS informiert werden.
Weitere Anwendungen sind beispielsweise die Übermittlung angefragter Kontaktdaten eines oder mehrer Redner via SMS oder die Information über die Beendigung einer Unterbrechung der Veranstaltung. Dadurch sind die Teilnehmer nicht mehr gezwungen, sich ständig am Veranstaltungsort aufzuhalten, um die Wiederaufnahme der Veranstaltung nicht zu verpassen.
Die während des Betriebs des Verfahrens erzeugten und/oder bearbeiteten Daten und Dateien können auf dafür vorgesehenen Anzeigeeinrichtungen 18, 19, 20 angezeigt werden. Dabei ist die Erfindung nicht auf bestimmte Arten von Anzeigeeinrichtungen beschränkt. Beispielsweise kann es sich hierbei um eine Hauptanzeigeeinrichtung 18 handeln, auf der die jeweils gerade stattfindende Hauptpräsentation dargestellt wird. Alternativ oder zusätzlich könnte auch eine Anzeigeeinrichtung 19 für diejenige Person vorgesehen sein, die gerade einen Vortrag hält. Darüber hinaus ist es natürlich auch denkbar, dass jeder einzelne Teilnehmer über eine eigene Anzeigeeinrichtung 20 verfügt, bei der es sich beispielsweise um ein Display seiner Endeinrichtung 13, 14 handeln kann.
Das erfindungsgemäße Verfahren sowie das erfindungsgemäße System zeichnen sich dadurch aus, das eine Anzahl von Nutzern, denen jeweils eine Endeinrichtung 13, 14 zugeordnet ist, über die Endeinrichtungen 13, 14 in einem Netzwerk 10, beispielsweise einem Kommunikationsnetzwerk, kommunizieren kann. Die im Netzwerk 10 vorhandenen Kommunikationskanäle 15, 16, die je nach verwendetem Netzwerk unterschiedlich ausgestaltet sein können, werden erfindungsgemäß nunmehr für die Übermittlung und Durchführung von Interaktionen herangezogen. Somit wird es nunmehr möglich, die Nutzer, beispielsweise Teilnehmer einer Veranstaltung, sinnvoll und aktiv in die Veranstaltung mit einzubeziehen. Die Kommunikation erfolgt mit und/oder über die wenigstens eine Zentraleinheit 12.

### Bezugszeichenliste

- 10: Netzwerk (Kommunikationsnetzwerk)
- 11: Administratorinstanz
- 12: Zentraleinheit
- 13: Endeinrichtung (eines Nutzers)
- 14: Endeinrichtung (eines Nutzers)
- 15: Kommunikationskanal
- 16: Kommunikationskanal
- 17: Kongresszentrale
- 18: Anzeigeeinrichtung
- 19: Anzeigeeinrichtung
- 20: Anzeigeeinrichtung
- 21: Endeinrichtung (der Administratorinstanz)

## Patentansprüche

1. Verfahren zur elektronischen Interaktion in einem Netzwerk (10), insbesondere in einem Kommunikationsnetzwerk, wobei das Netzwerk (10) wenigstens eine einer Administratorinstanz (11) zugeordnete Zentraleinheit (12) aufweist und den Nutzern des Netzwerks (10) Endeinrichtungen (13, 14) zugeordnet sind und wobei eine Kommunikation zwischen den Endeinrichtungen (13, 14) und der wenigstens einen Zentraleinheit (12) über die Kommunikationskanäle (15, 16) des Netzwerks (10) erfolgt,
**dadurch gekennzeichnet,**
**dass** über die Kommunikationskanäle (15, 16) bidirektionale Interaktionen zwischen wenigstens einer Zentraleinheit (12) und den Endeinrichtungen (13, 14) übermittelt und/oder durchgeführt werden;
**dass** jedem Nutzer eine Identifikationsdatei zugeordnet wird;
**dass** die jedem Nutzer zugeordnete Identifikationsdatei netzwerkseitig zumindest zeitweilig abgelegt wird, so dass die wenigstens eine Zentraleinheit (12) auf die Identifikationsdateien zugreifen kann; und
**dass** von den Nutzern oder der Administratorinstanz erzeugte Informationsdateien mit den entsprechenden Identifikationsdateien der Nutzer verknüpft und anschließend übertragen werden.

2. Verfahren nach Anspruch 1, **dadurch gekennzeichnet, dass** für die Nutzer wenigstens eine nutzerspezifische Attributdatei erzeugt wird, dass die Attributdatei(en) mit der Identifikationsdatei des Nutzers zu einer Profildatei verknüpft wird/werden und dass die Profildateien aller Nutzer zumindest zeitweilig in einer Datenbank abgelegt werden.

3. Verfahren nach Anspruch 1 oder 2, **dadurch gekennzeichnet, dass** die netzwerkseitig abgelegten Identifikationsdateien und/oder die Datenbank mit Profildateien in wenigstens einer Zentraleinheit (12), oder in einer davon separaten Speichereinrichtung, mit der die Zentraleinheit (12) kommuniziert, abgespeichert werden.

4. Verfahren nach einem der Ansprüche 1 bis 3, **dadurch gekennzeichnet, dass** ein Nutzer eine Informationsdatei in seiner Endeinrichtung (13, 14) erzeugt, dass die Informationsdatei in der Endeinrichtung (13, 14) mit der Identifikationsdatei des Nutzers verknüpft und anschließend an wenigstens eine Zentraleinheit (12) übertragen wird und dass in der Zentraleinheit (12) die eingehende Identifikationsdatei mit den netzwerkseitig abgelegten Identifikationsdateien verglichen und bei Übereinstimmung die übertragene Informationsdatei in der Zentraleinheit (12) weiterverarbeitet wird.

5. Verfahren nach Anspruch 4, soweit auf einen der Ansprüche 2 oder 3 rückbezogen, **dadurch gekennzeichnet, dass** bei Übereinstimmung von Identifikationsdateien die Informationsdatei um wenigstens eine Attributdatei des entsprechenden Nutzers ergänzt wird.

6. Verfahren nach einem der Ansprüche 1 bis 5, **dadurch gekennzeichnet, dass** die von den Endeinrichtungen (13, 14) übertragenen Informationsdateien in einer netzwerkseitig vorgehaltenen Speichereinrichtung, auf die die wenigstens eine Zentraleinheit (12) Zugriff hat, zumindest zeitweilig abgespeichert werden.

7. Verfahren nach einem der Ansprüche 1 bis 6, **dadurch gekennzeichnet, dass** von wenigstens einer Administratorinstanz (11) in einer dieser zugeordneten Endeinrichtung (21) eine Informationsdatei erzeugt wird, dass die Informationsdatei mit der/den Identifikationsdatei(en) eines oder mehrerer Adressatnutzer verknüpft und an die Endeinrichtung(en) (13, 14) des/der jeweiligen Adressatnutzer(s) übertragen wird/werden und dass die Informationsdatei(en) in der/den Endeinrichtung(en) (13, 14) dargestellt und/oder abgespeichert und/oder weiterverarbeitet wird/werden.

8. Verfahren nach einem der Ansprüche 1 bis 7, **dadurch gekennzeichnet, dass** die in der Zentraleinheit (12) eingegangenen und/oder bearbeiteten Informationsdateien auf wenigstens einer Anzeigeinrichtung (18, 19, 20) zumindest zeitweilig dargestellt und/oder an die Endeinrichtung(en) (13, 14) zumindest eines Nutzers übertragen werden.

9. Verfahren nach einem der Ansprüche 1 bis 8, **dadurch gekennzeichnet, dass** aus zumindest einzelnen der in der Zentraleinheit (12) eingegangenen und/oder bearbeiteten Informationsdateien wenigstens eine Reportdatei erzeugt wird.

10. Verfahren nach einem der Ansprüche 1 bis 9, **dadurch gekennzeichnet, dass** zumindest einzelne während der Durchführung des Verfahrens erzeugten Daten und Dateien mit einem Kategorie-Tag verknüpft werden.

11. System zum elektronischen Interagieren, mit einem Netzwerk (10), insbesondere einem Kommunikationsnetzwerk, wobei das Netzwerk (10) wenigstens eine einer Administratorinstanz (11) zugeordnete Zentraleinheit (12) aufweist und den Nutzern des Verfahrens Endeinrichtungen (13, 14) zugeordnet sind und wobei zur Kommunikation zwischen den Endeinrichtungen (13, 14) und der wenigstens einen Zentraleinheit (12) Kommunikationskanäle (15, 16) des Netzwerks (10) vorgesehen sind, **dadurch gekennzeichnet, dass** die Kommunikationskanäle (15, 16) zur bidirektionalen Interaktionen zwischen wenigstens einer Zentraleinheit (12) und den Endeinrichtungen (13, 14) ausgebildet sind, dass jedem Nutzer eine Identifikationsdatei zugeordnet ist, dass die jedem Nutzer zugeordnete Identifikationsdatei netzwerkseitig derart abgelegt ist, so dass die wenigstens eine Zentraleinheit (12) auf die Identifikationsdateien Zugriff hat, dass Mittel zum Verknüpfen der von den Nutzern oder der Administratorinstanz erzeugten Informationsdateien mit den entsprechenden Identifikationsdateien der Nutzer vorgesehen sind und dass Mittel zum Übertragen der mit den Identifikationsdateien verknüpften Informationsdateien vorgesehen sind.

12. System nach Anspruch 11, **dadurch gekennzeichnet, dass** dieses Mittel zur Durchführung des Verfahrens nach einem der Ansprüche 1 bis 10 aufweist.

13. System nach Anspruch 11 oder 12, **dadurch gekennzeichnet, dass** das Netzwerk (10) als singuläres oder hybrides Netzwerk ausgebildet ist, bestehend aus einer Telekommunikationsnetzwerk-Komponente und/oder einer internetbasierten Kommunikationsnetzwerk-Komponente.
